# EUROPÄISCHE PATENTANMELDUNG

(11) **EP 3 796 757 A1**
(43) Veröffentlichungstag der Anmeldung: **24.03.2021**
(21) Anmeldenummer: 20196974.8
(22) Anmeldetag: 18.09.2020
(51) Int. Cl.: H05B 45/37

(54) **LINEARES LICHTBAND MIT ABWÄRTSWANDLER**

(30) Priorität: 20.09.2019 DE 102019125404
(71) Anmelder: Bilton International GmbH, 5760 Saalfelden (AT)
(72) Erfinder: Michal, Roland, 5760 Saalfelden (AT); Witthalm, Franz, 1030 Wien (AT)
(74) Vertreter: Epping - Hermann - Fischer

(57) **Zusammenfassung**

Ein lineares Lichtband (10) umfasst mindestens zwei Segmente (11, 30). Die mindestens zwei Segmente (11, 30) sind miteinander gekoppelt und umfassen jeweils: einen flexiblen Leiterplattenabschnitt (26), einen induktiven Abwärtswandler (12) und mindestens eine Leuchtdiode (13, 14), die mit dem Abwärtswandler (12) zur Energieversorgung der mindestens einen Leuchtdiode (13, 14) gekoppelt ist.

## Beschreibung

Es wird ein lineares Lichtband mit Abwärtswandler beschrieben.

Das lineare Lichtband kann als Leuchtdioden-Band, abgekürzt LED-Band realisiert werden. LED-Bänder auf flexiblen Leiterplatten (englisch: flexible printed circuit board; abgekürzt: FPCB) haben sich als kostengünstige und variable Lichtquelle für ein breites Anwendungsspektrum bewährt. Vor allem im professionellen Anwendungsbereich sind jedoch flexible LED-Bänder gefragt, die eine Verbesserung in Richtung Effizienz, Betriebsbandlänge, Einhaltung vorgegebener Beleuchtungsparameter sowie Qualität und Zuverlässigkeit aufweisen.

Mehrere Leuchtdioden, abgekürzt LEDs, und eine individuelle Stromregelung bilden beispielsweise ein Segment, auch Bandsegment oder Einzelsegment genannt, des linearen Lichtbandes. Das komplette LED-Band kombiniert viele dieser Einzelsegmente. Die Anzahl der möglichen LEDs pro Segment wird dadurch bestimmt, dass die Summe der Durchlassspannungen der einzelnen LEDs eines Segments deutlich niedriger sein muss als die Betriebsspannung. Eine Differenz zwischen der Betriebsspannung und der Summe der Durchlassspannungen ist erforderlich, um eine ausreichende Spannung für die Stromregelung auf jedem Segment bereitzustellen. Die ohmschen Verluste des Stroms im Lichtband bewirken einen Spannungsabfall und reduzieren somit die Betriebsspannung an einem Segment und daher auch die Differenzspannung. Der Wirkungsgrad eines LED-Bandes wird also nicht nur durch den Wirkungsgrad der LEDs bestimmt, sondern auch durch die Verluste der Stromregelung und des Stromflusses in der flexiblen Leiterplatte.

Die Stromregelung kann mittels Widerstände realisiert werden. Vorteil ist die einfache und kostengünstige Konstruktion. Nachteile sind, dass die Verluste durch diese einfache Stromregelung relativ hoch sind und der Lichtstrom entlang des LED-Bandes deutlich abnimmt.

Es ist eine Aufgabe der Erfindung, ein lineares Lichtband anzugeben, mit dem eine hohe Energieeffizienz erreichbar ist.

Die Aufgabe wird durch ein lineares Lichtband mit den Merkmalen des Anspruchs 1 gelöst. Vorteilhafte Weiterbildungen sind Gegenstand der abhängigen Ansprüche. Der Offenbarungsgehalt der Patentansprüche wird hiermit durch Bezugnahme vollumfänglich in die Beschreibung aufgenommen.

Bei einer Ausführungsform umfasst ein lineares Lichtband mindestens zwei Segmente. Die mindestens zwei Segmente sind miteinander gekoppelt. Die mindestens zwei Segmente umfassen jeweils einen Leiterplattenabschnitt, einen Abwärtswandler und mindestens eine Leuchtdiode. Der Leiterplattenabschnitt ist als flexibler Leiterplattenabschnitt realisiert. Der Abwärtswandler ist als induktiver Abwärtswandler implementiert. Die mindestens eine Leuchtdiode ist mit dem Abwärtswandler gekoppelt. Die Kopplung der mindestens einen Leuchtdiode mit dem Abwärtswandler ist zur Energieversorgung der mindestens einen Leuchtdiode implementiert.

Mit Vorteil kann ein induktiver Abwärtswandler einen Laststrom zur Versorgung der mindestens einen Leuchtdiode aus einer elektrischen Energie mit hoher Effizienz generieren.

Bei einer Ausführungsform ist der Abwärtswandler ausgelegt, bei einer Betriebsspannung über einem ersten Wert als oszillierender Abwärtswandler den Laststrom abzugeben und bei einer Betriebsspannung unter dem ersten Wert als linearer Regler den Laststrom abzugeben.

Bei einer Ausführungsform ist die Betriebsspannung diejenige Spannung, die einem Segment zugeführt wird. Dem ersten Segment des linearen Lichtbandes führt eine Spannungsversorgung die Betriebsspannung zu. Das zweite Segment erhält die Betriebsspannung über das erste Segment.

Bei einer Ausführungsform weist der Abwärtswandler eine erste und eine zweite Betriebsart auf. In der ersten Betriebsart gibt er den Laststrom als oszillierender Abwärtswandler ab. In der zweiten Betriebsart gibt er den Laststrom als linearer Regler ab. Der Abwärtswandler stellt sich selbsttätig in die erste Betriebsart ein, wenn eine Betriebsspannung über einem ersten Wert ist. Ebenso stellt sich der Abwärtswandler selbsttätig in die zweite Betriebsart ein, wenn die Betriebsspannung unter dem ersten Wert ist.

Bei einer Ausführungsform sind die mindestens zwei Segmente frei von einer als diskretes Bauelement realisierten Kapazität. Da die Segmente frei von einer diskreten Kapazität sind, ist mit Vorteil vermieden, dass die Segmente des linearen Lichtbandes beim Anschalten der Spannungsversorgung erst einen Aufladeprozess durchlaufen, ehe die verschiedenen Segmente im Betrieb gehen. Somit kann eine das lineare Lichtband versorgende Spannungsversorgung getaktet betrieben werden. Das lineare Lichtband kann daher gedimmt werden.

Bei einer Ausführungsform umfassen die mindestens zwei Segmente jeweils eine erste Versorgungsleitung. Der Abwärtswandler umfasst einen ersten Widerstand, einen ersten Transistor und eine Induktivität, die seriell zwischen der ersten Versorgungsleitung und einem Wandlerausgang des Abwärtswandlers angeordnet sind.

Bei einer Ausführungsform ist ein erster Anschluss des ersten Transistors über den ersten Widerstand mit der ersten Versorgungsleitung gekoppelt. Ein zweiter Anschluss des ersten Transistors ist über die Induktivität mit dem Wandlerausgang gekoppelt.

Bei einer Ausführungsform umfassen die mindestens zwei Segmente jeweils eine zweite Versorgungsleitung. Der Abwärtswandler umfasst eine Diode, die einen ersten Knoten zwischen dem ersten Transistor und der Induktivität mit der zweiten Versorgungsleitung koppelt.

Die erste Versorgungsleitung kann eine Spannungsversorgungsleitung und die zweite Versorgungsleitung kann eine Bezugspotentialleitung sein. Alternativ kann die erste Versorgungsleitung eine Bezugspotentialleitung und die zweite Versorgungsleitung eine Spannungsversorgungsleitung sein. Die Versorgungsleitungen sind durchgehend durch das lineare Lichtband.

Bei einer Ausführungsform umfasst der Abwärtswandler einen zweiten Transistor. Der zweite Transistor umfasst einen ersten Anschluss, der mit der ersten Versorgungsleitung gekoppelt ist, einen zweiten Anschluss, der mit einem Steueranschluss des ersten Transistors gekoppelt ist, und einen Steueranschluss, der mit einem Knoten zwischen dem ersten Widerstand und dem ersten Transistor gekoppelt ist.

Bei einer Ausführungsform umfasst der Abwärtswandler einen dritten Widerstand und einen dritten Transistor. Der dritte Transistor umfasst einen ersten Anschluss, der mit einem Steueranschluss des ersten Transistors gekoppelt ist, einen zweiten Anschluss, der über den dritten Widerstand mit der zweiten Versorgungsleitung gekoppelt ist, und einen Steueranschluss, der mit einem ersten Knoten zwischen dem ersten Transistor und der Induktivität gekoppelt ist.

Bei einer Ausführungsform ist die mindestens eine Leuchtdiode als eine erste Anzahl N von Leuchtdioden realisiert, die seriell angeordnet sind und an einen Wandlerausgang des Abwärtswandlers angeschlossen sind. Die erste Anzahl N ist größer als eins. Zwischen zwei der ersten Anzahl N von Leuchtdioden ist eine Anschlussstelle realisiert, die mit der zweiten Versorgungsleitung verbindbar ist. Bei einer Ausführungsform ist die Anschlussstelle mit der zweiten Versorgungsleitung, z.B. mit einem Draht, elektrisch leitend verbunden; diese Verbindung kann z.B. nach der Herstellung des linearen Lichtbandes erfolgen, etwa vor dem Einbau des linearen Lichtbandes in ein Gehäuse etc..

Bei einer Ausführungsform ist das lineare Lichtband mittels LED-Bandtechnologie realisiert, die einen vereinfachten Abwärtswandler in jedem Segment des LED-Bandes verwendet. Der Abwärtswandler ist als Abwärtsregler, Buck-Regler oder Step-Down-Konverter implementiert. Der Abwärtswandler arbeitet mit einer Frequenz aus einem Bereich von 100 kHz bis 50 MHz oder alternativ von 1 MHz bis 10 MHz. Beispielsweise beträgt die Frequenz 3,5 MHz. Somit wird ausschließlich eine geringe Induktivität für den Betrieb verwendet. Der Abwärtswandler ermöglicht eine korrekte Stromregelung, auch wenn die Betriebsspannung entlang des linearen Lichtbandes unter die erforderliche Betriebsspannung des Abwärtswandlers fällt. In diesem Fall beginnt der Abwärtswandler wie ein linearer Stromregler zu funktionieren. Diese Funktion sichert die einwandfreie Funktion des Lichtbandes über eine außergewöhnliche Bandlänge. Die Betriebsspannung kann Versorgungsspannung genannt werden.

Bei einer Ausführungsform ist das lineare Lichtband als LED-Band auf flexibler Leiterplatte realisiert, wobei zur Stromregelung ein Abwärtswandler zur Anwendung kommt. Der Abwärtswandler kann als Step-Down-Konverter realisiert sein. Im Unterschied zu Netzteilen kommt bei Lichtbändern eine wesentlich andere Auslegung des Step-Down-Konverters (Größe der Induktivität, Betriebsfrequenz usw.) zur Anwendung. Der Step-Down-Konverter auf dem LED-Band hat den Vorteil, dass eine geringe Verlustleistung zur Stromregelung auftritt. Dadurch kann auch ein sehr langes LED-Band mit nur einer Einspeisung betrieben werden.

Mit Vorteil kann der Abwärtswandler in dem LED-Band als einfache und robuste Schaltung entworfen werden. Es werden ausschließlich nur kleine Komponenten verwendet, um die Flexibilität des LED-Bands sicherzustellen (ein Biegeradius von z.B. 20mm wird erreicht). Der Abwärtswandler wird im Hochfrequenzbereich betrieben, um insbesondere eine kleine und damit auf einem flexiblen LED-Band bestückbare Induktivität zu verwenden. Der Abwärtswandler ist mit Vorteil eine robuste Schaltung auf Basis weniger Bauteile, um den Schaltungsaufwand auf jedem LED-Segment klein zu halten (jedes Segment von beispielsweise 100mm Länge weist einen vollständigen Step-Down-Konverter auf).

Bei einer Ausführungsform kann das LED-Band innerhalb eines Segments beliebig gekürzt werden, wobei das Segment am Ende kurzgeschlossen wird.

Bei einer Ausführungsform funktioniert der Abwärtswandler wie eine lineare Regelung, wenn die Betriebsspannung am Step-Down-Konverter zu klein wird. Dies trägt zu einer Verlängerung des LED-Bands bei.

Bei einer Ausführungsform ist die Anzahl der Transistoren des Abwärtswandlers kleiner 10, alternativ kleiner 5 oder alternativ kleiner 4. Die Anzahl der Transistoren des Abwärtswandlers kann exakt drei sein.

Bei einer Ausführungsform umfasst der Abwärtswandler eine Thyristor-Tetrode. Die Thyristor-Tetrode kann anstelle des ersten und des zweiten Transistors in den Abwärtswandler eingebaut werden.

Bei einer Ausführungsform ist das Segment frei von einer Stromquelle oder Stromsenke. Das Segment enthält den Abwärtswandler; jedoch wird zusätzlich zum Abwärtswandler keine Stromquelle oder Stromsenke benötigt. Mit Vorteil weist der Abwärtswandler bereits eine stromregelnde Funktion auf, insbesondere auch in der ersten Betriebsart. Somit stellt der Abwärtswandler in der ersten und in der zweiten Betriebsart den Laststrom ein. Dabei führt der Abwärtswandler in der ersten Betriebsart eine Abwärtswandlung der Betriebsspannung in eine am Wandlerausgang abgreifbare Ausgangsspannung durch.

Diese Ausgangsspannung fällt über der ersten Anzahl von Leuchtdioden ab und versorgt diese. Der Abwärtswandler ist bei einer Betriebsspannung über dem ersten Wert in der ersten Betriebsart und bei einer Betriebsspannung unter dem ersten Wert in der zweiten Betriebsart. Durch das Fehlen einer Stromsenke oder -quelle im Segment ist die Effektivität hoch.

Die oben genannten Eigenschaften, Merkmale und Vorteile des linearen Lichtbandes und deren Ausführungsformen und die Art und Weise, wie dies erreicht wird, werden durch die folgende Beschreibung der Ausführungsbeispiele der Erfindung in Verbindung mit den entsprechenden Figuren weitergehend erläutert. Es zeigen:
- Figur 1: ein Beispiel einer schematischen Darstellung eines linearen Lichtbandes;
- Figuren 2A und 2B: jeweils Darstellungen unterschiedlicher Ausführungsbeispiele eines linearen Lichtbandes,
- Figuren 3A und 3B: Beispiele für Charakteristiken eines linearen Lichtbandes und
- Figur 4: eine schematische Darstellung eines weiteren Ausführungsbeispiels eines linearen Lichtbandes.

In den unterschiedlichen Ausführungsbeispielen, Ausführungsformen und Ausgestaltungen sind gleiche und gleichwirkende Bestandteile figurenübergreifend jeweils mit denselben Bezugszeichen versehen. Die Figuren sind grundsätzlich nicht maßstabsgetreu.

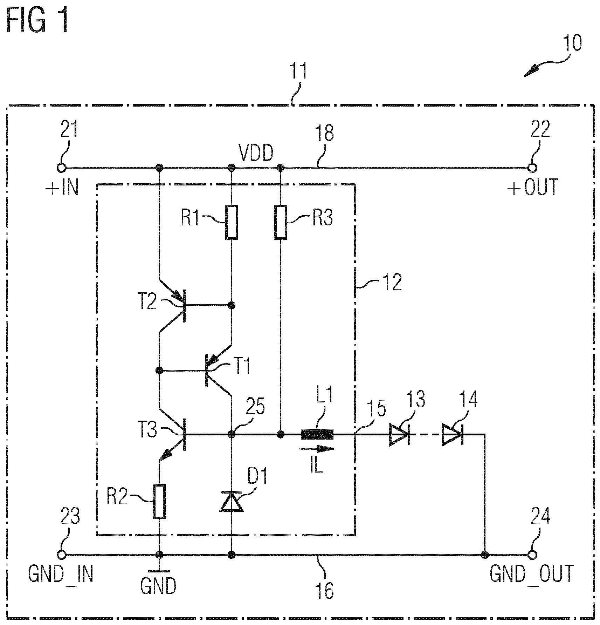

Figur 1 zeigt ein Beispiel für ein lineares Lichtband 10, das ein Segment 11 umfasst. In Figur 1 ist ein Beispiel für eine schaltungstechnische Realisierung des Segments 11 gezeigt. Das Segment 11 umfasst einen Abwärtswandler 12 und mindestens eine Leuchtdiode 13. Der Abwärtswandler 12 ist als induktiver Abwärtswandler realisiert. Das Segment 11 umfasst eine erste Anzahl N von Leuchtdioden 13, 14. In Figur 1 nimmt die erste Anzahl N den Wert 2 an. Die erste Anzahl N kann jedoch auch 1, größer als 1, größer als 2, größer als 5 oder größer als 10 sein. Beispielsweise kann die erste Anzahl N aus einem Bereich zwischen 1 und 100 oder alternativ aus einem Bereich zwischen 5 und 20 sein. Die erste Anzahl N von Leuchtdioden 13, 14 sind seriell geschaltet. Der Abwärtswandler 12 weist einen Wandlerausgang 15 auf. Weiter umfasst das Segment 11 eine erste Versorgungsleitung 18 und eine zweite Versorgungsleitung 16. Die Serienschaltung der ersten Anzahl N von Leuchtdioden 13, 14 koppelt den Wandlerausgang 15 mit der zweiten Versorgungsleitung 16.

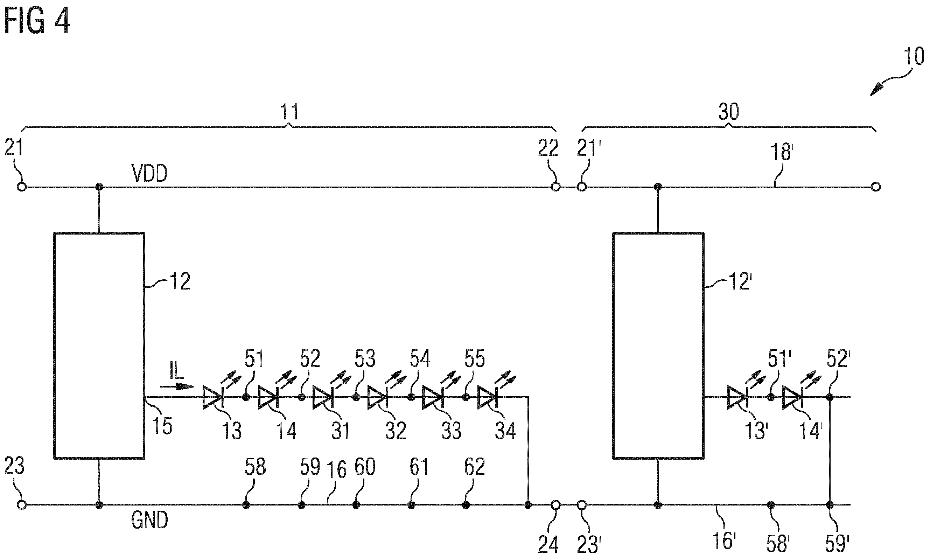

Die erste Versorgungsleitung 18 umfasst einen Eingangsanschluss 21 und einen Ausgangsanschluss 22. Ebenso umfasst die zweite Versorgungsleitung 16 einen Eingangsanschluss 23 und einen Ausgangsanschluss 24. Der Eingangsanschluss 21 der ersten Versorgungsleitung 18 sowie der Eingangsanschluss 23 der zweiten Versorgungsleitung 16 sind an die entsprechenden Ausgangsanschlüsse des vorhergehenden Segments oder einer Spannungsversorgung angeschlossen. Entsprechend ist der Ausgangsanschluss 22 der ersten Versorgungsleitung 18 und der Ausgangsanschluss 24 der zweiten Versorgungsleitung 16 an die entsprechenden Eingangsanschlüsse des nachfolgenden Segments angeschlossen oder offengelassen (siehe Figur 4).

Der Abwärtswandler 12 umfasst einen ersten Widerstand R1, einen ersten Transistor T1 und eine Induktivität L1. Der erste Widerstand R1 verbindet die erste Versorgungsleitung 18 mit einem ersten Anschluss des ersten Transistors T1. Ebenso verbindet die Induktivität L1 einen zweiten Anschluss des ersten Transistors T1 mit dem Wandlerausgang 15. Somit koppelt eine Serienschaltung umfassend den ersten Widerstand R1, den ersten Transistor T1 und die Induktivität L1 die erste Versorgungsleitung 18 mit dem Wandlerausgang 15. Der erste Transistor T1 kann als Bipolartransistor, insbesondere als pnp-Bipolartransistor, realisiert sein. Der erste Anschluss des ersten Transistors T1 kann somit ein Emitter und der zweite Anschluss des ersten Transistors T1 ein Kollektor sein.

Darüber hinaus umfasst der Abwärtswandler 12 eine Diode D1, die die zweite Versorgungsleitung 16 mit einem ersten Knoten 25 zwischen dem ersten Transistor T1 und der Induktivität L1 verbindet. Damit ist eine Anode der Diode D1 an die zweite Versorgungsleitung 16 und eine Kathode der Diode D1 über den ersten Knoten 25 an die Induktivität L1 und an den zweiten Anschluss des ersten Transistors T1 angeschlossen.

Ferner umfasst der Abwärtswandler 12 einen zweiten Transistor T2. Der zweite Transistor T2 weist einen ersten Anschluss auf, der mit der Spannungseingangsleitung 18 verbunden ist, sowie einen zweiten Anschluss, der mit einem Steueranschluss des ersten Transistors T1 gekoppelt ist. Ein Steueranschluss des zweiten Transistors T2 ist mit einem Knoten zwischen dem ersten Widerstand R1 und dem ersten Transistor T1 verbunden. Der zweite Transistor T2 kann als Bipolartransistor, insbesondere als pnp-Transistor, realisiert sein.

Weiter umfasst der Abwärtswandler 12 einen dritten Transistor T3 mit einem ersten Anschluss, der mit dem zweiten Anschluss des zweiten Transistors T2 und mit dem Steueranschluss des ersten Transistors T1 verbunden ist. Der dritte Transistor T3 kann als Bipolartransistor, insbesondere als npn-Transistor, realisiert sein. Ein zweiter Anschluss des dritten Transistors T3 ist über einen zweiten Widerstand R2 des Abwärtswandlers 12 mit der zweiten Versorgungsleitung 16 verbunden. Ein Steueranschluss des dritten Transistors T3 ist über den ersten Knoten 25 an die Diode D1, den zweiten Anschluss des ersten Transistors T1 und die Induktivität L1 angeschlossen. Zusätzlich umfasst der Abwärtswandler 12 einen dritten Widerstand R3, der die erste Versorgungsleitung 18 mit dem ersten Knoten 25 verbindet.

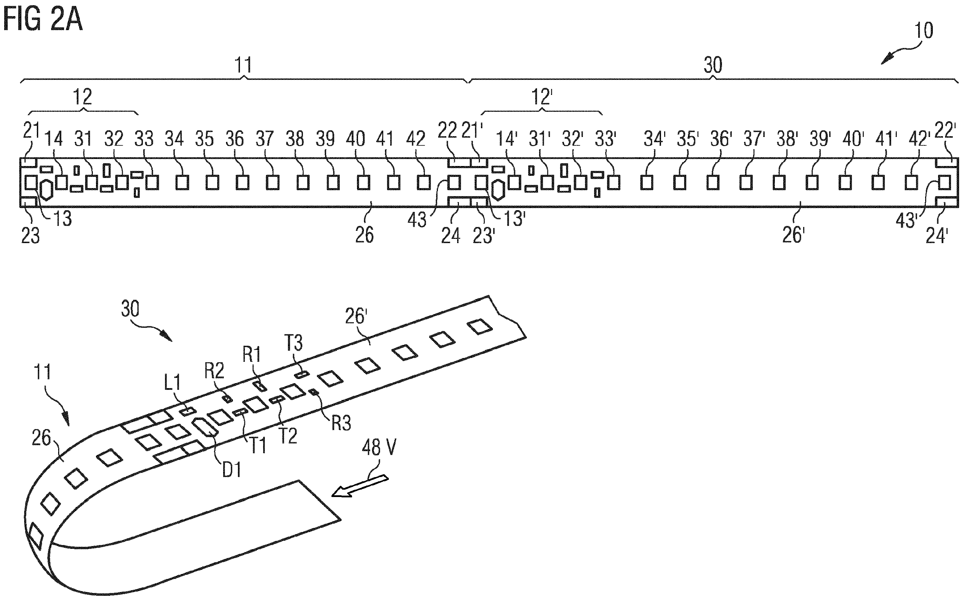

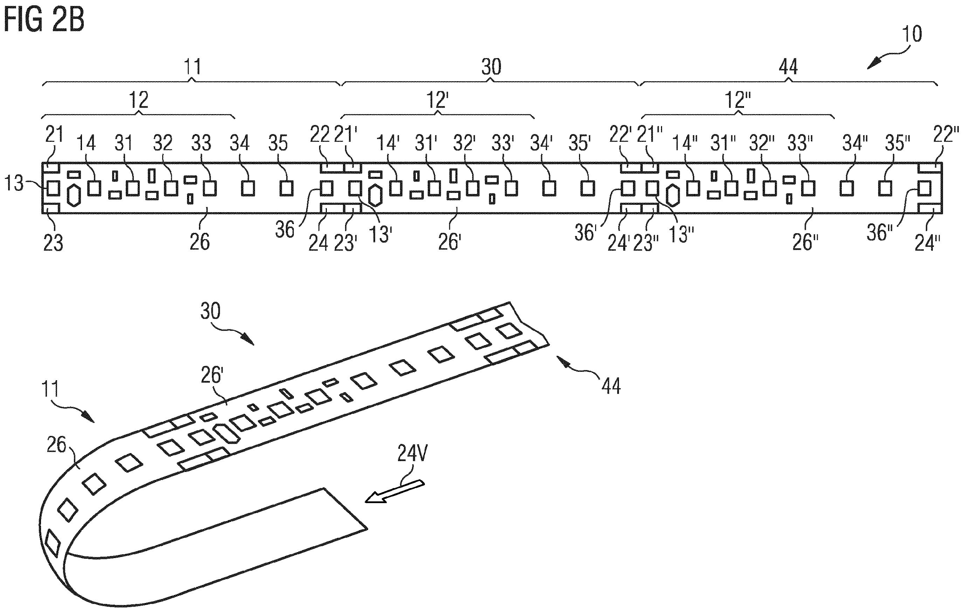

Der erste, zweite und dritte Transistor T1, T2, T3, der erste, zweite und dritte Widerstand R1, R2, R3 und die Diode D1 können als einzelne Bauelemente auf einem flexiblen Leiterplattenabschnitt 26 aufgebracht sein (siehe Figuren 2A und 2B).

Alternativ können der erste, zweite und dritte Transistor T1, T2, T3, der erste, zweite und dritte Widerstand R1, R2, R3 und die Diode D1 auf einem Halbleiterkörper integriert sein. Der Abwärtswandler 12 kann mit Ausnahme der Induktivität L1 als integrierte Schaltung, die auch Chip oder Die genannt werden kann, implementiert sein.

Der Abwärtswandler 12 führt eine Abwärtswandlung einer Betriebsspannung VDD in eine am Wandlerausgang 15 abgreifbare Ausgangsspannung zur Versorgung der ersten Anzahl N von Leuchtdioden 13, 14 durch. Der dritte Widerstand R3 dient als Startwiderstand. Eine erste Periode der Abwärtswandlung läuft wie folgt ab: Wird die Betriebsspannung VDD an die erste Versorgungsleitung 18 angelegt, so wird der dritte Transistor T3 leitend und demzufolge der erste Transistor T1 ebenfalls leitend sowie der zweite Transistor T2 nicht-leitend geschaltet. Es fängt somit ein Strom, als Laststrom IL bezeichnet, an, von der ersten Versorgungsleitung 18 über den ersten Widerstand R1, den ersten Transistor T1 und die Induktivität L1 zum Wandlerausgang 15 und damit zur Serienschaltung der ersten Anzahl N von Leuchtdioden 13, 14 zu fließen. Dabei sind weiter der erste und der dritte Transistor T1, T3 leitend und der zweite Transistor T2 nicht-leitend (das heißt sperrend) geschaltet.

Somit steigt der Laststrom IL an. Der ansteigende Laststrom IL durch die erste Anzahl N von Leuchtdioden 13, 14 resultiert in einem Anstieg des Spannungsabfalls über dem ersten Widerstand R1, was dazu führt, dass ab einem vorbestimmten Wert der zweite Transistor T2 leitend geschaltet und infolgedessen der erste Transistor T1 nicht-leitend geschaltet wird. Der durch die Induktivität L1 und die erste Anzahl N von Leuchtdioden 13, 14 fließende Laststrom IL wird aufgrund der von der Induktivität L1 gespeicherten elektrischen Energie aufrechterhalten, dadurch, dass der Laststrom IL nun durch die Diode L1 fließt. Der Laststrom IL nimmt ab, bis der zweite Transistor T2 nicht-leitend wird und der erste und dritte Transistor T1, T3 leitend geschaltet werden. Damit beginnt eine weitere Periode der Abwärtswandlung (die wie die erste Periode abläuft).

An der ersten Versorgungsleitung 18 liegt z.B. eine Betriebsspannung VDD an. An der zweiten Versorgungsleitung 16 ist z.B. ein Bezugspotential GND abgreifbar. Die erste Versorgungsleitung 18 kann eine Spannungsversorgungsleitung sein. Die zweite Versorgungsleitung 16 kann eine Bezugspotentialleitung sein.

Aufgrund eines ohmschen Widerstands der ersten Versorgungsleitung 18 und eines ohmschen Widerstands der zweiten Versorgungsleitung 16 sind die Spannungen an den Eingangsanschlüssen 21, 23 +IN beziehungsweise GND_IN geringfügig von den Werten +OUT, GND_OUT an den Ausgangsanschlüssen 22, 24 verschieden.

In einer ersten Betriebsart (oben geschildert) führt der Abwärtswandler 12 Oszillationen durch. Der Abwärtswandler 12 ist als Buck-Wandler realisiert. In einer ersten Phase der Abwärtswandlung steigt der Laststrom IL und in einer zweiten Phase der Abwärtswandlung sinkt der Laststrom IL. Die beiden Phasen bilden eine Periode. Die Summe der Dauer der ersten Phase und der Dauer der zweiten Phase ist somit die Periodendauer und damit der Kehrwert der Oszillatorfrequenz des Abwärtswandlers 12. Der Laststrom IL ist der durch die Leuchtdioden 13, 14 fließende Strom und kann daher auch als LED-Strom bezeichnet werden.

Ist bei dem Segment 11 der Wert der Versorgungsspannung VDD unter einem ersten Wert, so steigt der Laststrom IL zwar an, wird aber nicht hoch genug. Daher kann der Spannungsabfall am ersten Widerstand R1 den zweiten Transistor T2 nicht leitend schalten und damit bleibt der erste Transistor T1 leitend. Somit wird bei einer Versorgungsspannung VDD unter dem ersten Wert kein oszillierender Betrieb des Abwärtswandlers 12 erreicht. Der Abwärtswandler 12 befindet sich somit in einer zweiten Betriebsart und kann als linearer Regler beschrieben werden. In der zweiten Betriebsart wird der Wert des Laststroms IL hauptsächlich durch den Wert der Betriebsspannung VDD, den Widerstandswert des ersten Widerstands R1, den Innenwiderstand der Induktivität L1 und der Spannung zwischen Emitter und Kollektor des ersten Transistors T1 bestimmt.

Mit Vorteil operiert der Abwärtswandler 12 selbststätig. Mit Vorteil ist der Abwärtswandler 12 frei von einem Steueranschluss, der aus dem Segment 11 herausgeführt wird. Mit Vorteil wird der Abwärtswandler 12 ohne ein von extern zugeführtes Steuersignal betrieben.

Der in Figur 1 dargestellte Abwärtswandler 12 versorgt z.B. 14 LEDs und wird z.B. von einer Betriebsspannung VDD mit nominal 48 Volt versorgt. Der Abwärtswandler 12 ist als Step-Down-Konverter implementiert. Der Abwärtswandler 12 arbeitet an der Grenze von einer kontinuierlichen zu einer diskontinuierlichen Betriebsart (englisch: continuous mode/discontinuous mode; abgekürzt: CM/DM). Nach Anlegen der Betriebsspannung VDD liefert der Widerstand R3 den Einschaltbasisstrom für den dritten Transistor T3. Dieser beginnt zu leiten, dadurch erhält der erste Transistor T1 Basisstrom und beginnt zu leiten. Die Spannung am ersten Knoten 25 steigt an und erhöht den Basisstrom des zweiten Transistors T2, gleichzeitig steigt der Laststrom IL in der Induktivität L1 an.

Die Induktivität L1 kann als Spule realisiert sein. Die Stromanstiegsgeschwindigkeit wird von dem Wert der Induktivität L1 und der an ihr anliegenden Spannung bestimmt. Durch den Stromanstieg kommt es zu einem Spannungsabfall am ersten Widerstand R1. Der erste Widerstand R1 ist als Shunt-Widerstand realisiert. Erreicht dieser 0,7 Volt (R1 mit 10 Ohm, entsprechend 70mA), beginnt der zweite Transistor T2 auch zu leiten und verringert dadurch den Basisstrom des ersten Transistors T1.

Der Strom an der Induktivität L1 kann nicht weiter steigen und bewirkt dadurch eine Spannungssenke am ersten Knoten 25. Der dritte Transistor T3 wird dadurch ausgeschalten und in Folge dessen wird auch der erste Transistor T1 ausgeschalten. Der durch die Induktivität L1 fließende Laststrom IL fließt nun durch die Diode D1 weiter. Der Laststrom IL nimmt ab, bis er gegebenenfalls auf Null gesunken ist (das Minimum des Laststroms IL kann auch größer Null sein). Die Diode D1 kann als Schottky-Diode realisiert sein. Dadurch steigt die Spannung am dritten Transistor T3 wieder an und der Ablauf beginnt von neuem. Durch die Verschaltung des ersten und des zweiten Transistors T1, T2 als Thyristor-Tetrode sorgen sie für die positive Rückkopplung, durch welche die Schwingung erzeugt wird. Der zweite Transistor T2 führt zum Abschalten von dem ersten Transistor T1 bei einem eingestellten Wert des Laststroms IL. Wird die Differenz DeltaV zwischen der Betriebsspannung VDD und der über den LEDs abfallenden Spannung zu gering, um die Schwingung aufrecht zu erhalten (keine positive Rückkopplung mehr möglich), reißt diese ab. Der Abwärtswandler 12 versorgt die LEDs 13, 14 nur mehr linear als quasi Stromquelle.

Die Betriebsspannung VDD kann zwischen 2V und 350V, alternativ zwischen 3V und 130V, alternativ zwischen 5V und 100V oder alternativ zwischen 10V und 50V sein. Beispielsweise beträgt die Betriebsspannung VDD 24V oder 48V. Bei einer Betriebsspannung von 48V können doppelt so viele LEDs wie bei 24V betrieben werden. Dadurch wird die Bandlänge deutlich erhöht. Der Wirkungsgrad des LED-Bandes bleibt unverändert. Bei einer Betriebsspannung von 48V reduzieren sich der LED-Bandstrom und damit die ohmschen Verluste um 30% gegenüber einer 24V-Topologie. Dies wirkt sich ebenso positiv auf die maximale Betriebsbandlänge aus. Die Betriebsspannung VDD ist eine Gleichspannung. Alternativ und hier nicht gezeigt kann die Betriebsspannung VDD auch eine Wechselspannung sein.

Eine Effizienzsteigerung des LED-Bandes ist erzielt, dadurch dass anstelle einer Stromregelung (etwa mit einer Stromquelle, realisiert mit einem Widerstand) ein Abwärtswandler 12, auch Abwärtsregler oder Buck-Regler genannt, verwendet wird. In diesem Fall treten die Schaltverluste des Buck-Reglers 12 anstelle der ohmschen Verluste der Stromregelung auf. Das LED-Band 10 wird in einen Hochfrequenzmodus betrieben. Somit kann die für den Betrieb des Buck-Reglers 12 verwendete induktive Komponente L1 klein und kostengünstig sein.

Der Schaltungsaufbau des Abwärtswandlers 12 z.B. für eine Betriebsspannung VDD von 48V ist in Figur 1 dargestellt. Die Schaltung betreibt die LEDs 13, 14, die seriell angeschlossen sind. Dieser Buck-Regler 12 arbeitet an der Grenze eines kontinuierlichen/diskontinuierlichen Modus. Die Induktivität L1 dient als Energiespeicher zur Versorgung der LEDs 13, 14 mit dem Laststrom IL, der ein Dauerstrom sein kann.

Die Schaltung des Segments 11 ist so abgestimmt, dass sie z.B. mit einer Frequenz von ca. 3,5MHz schwingt. Bei geringerer Betriebsspannung VDD des Segments 11 wird diese Frequenz auf ca. 3,3MHz reduziert. Wenn die Differenzspannung zwischen der Betriebsspannung VDD und der Summe der Spannungen über den Leuchtdioden 13, 14 zu niedrig ist, um die Schwingung aufrechtzuerhalten, wirkt der Abwärtswandler 12 dann als lineare Stromquelle.

In einer alternativen, nicht gezeigten Ausführungsform ist die Diode D1 als ein Transistor, insbesondere als ein Bipolartransistor realisiert, der als Diode geschaltet ist.

Alternativ können der erste, zweite und dritte Transistor T1 - T3 als Bipolartransistoren mit isolierter Gate-Elektrode (englisch: insulated-gate bipolar transistor, kurz IGBT) oder Feldeffekttransistoren hergestellt sein.

In einer alternativen, nicht gezeigten Ausführungsform liegen an der ersten Versorgungsleitung 18 das Bezugspotential GND und an der zweiten Versorgungsleitung 16 die Betriebsspannung VDD an. Der Laststrom IL fließt dabei von der zweiten Versorgungsleitung 16 über die erste Anzahl N von Leuchtdioden, die Induktivität L1, den ersten Transistor T1 und den ersten Widerstand R1 zur ersten Versorgungsleitung 16. Die in Figur 1 gezeigte Schaltung kann somit "umgedreht" sein.

Figur 2A zeigt ein Beispiel für ein lineares Lichtband 10. In Figur 2A ist ein Prototyp eines Lichtbandes 10 mit der oben beschriebenen LED-Bandtopologie mit einer Betriebsspannung VDD von 48V und mit 14 oder 15 LEDs gezeigt. Das lineare Lichtband 10 umfasst zwei Segmente 11, 30, die hintereinander angeordnet sind. Das Segment 11 umfasst einen flexiblen Leiterplattenabschnitt 26, also einen Abschnitt einer flexiblen Leiterplatte (englisch: flexible printed circuit board). Entsprechend umfasst das weitere Segment 30 einen flexiblen Leiterplattenabschnitt 26'. Die Leiterplattenabschnitte 26, 26' schließen aneinander an und formen das Band. Die beiden Segmente 11, 30 weisen z.B. jeweils 15 Leuchtdioden 13, 14, 31 bis 43 auf. Weiter umfassen die beiden Segmente 11, 30 jeweils drei Transistoren T1, T2, T3, drei Widerstände R1, R2, R3, die Induktivität L1 und die Diode D1. Die Eingangsanschlüsse 21', 23' des weiteren Segments 30 sind an die Ausgangsanschlüsse 22, 24 des Segments 11 angeschlossen. Die Eingangsanschlüsse 21, 23 sowie die Ausgangsanschlüsse 22, 24 sind in diesem Beispiel nicht von einem Isolationsmaterial abgedeckt, so dass zu Test- und Experimentierzwecken Potentiale an ihnen abgegriffen werden können. Das lineare Lichtband 10 ist einmal in gerader Form und einmal in gebogener Form dargestellt.

Figur 2B zeigt ein weiteres Beispiel des linearen Lichtbands 10 mit drei Segmenten 11, 30, 44. In Figur 2B ist ein weiterer Prototyp mit acht LEDs mit einer Betriebsspannung VDD von 24V gezeigt. Die erste Anzahl N der Leuchtdioden ist somit gleich 8. Somit umfasst die erste Anzahl N von Leuchtdioden die Leuchtdioden 13, 14, 31 bis 36. Beide Prototypen funktionieren zufriedenstellend.

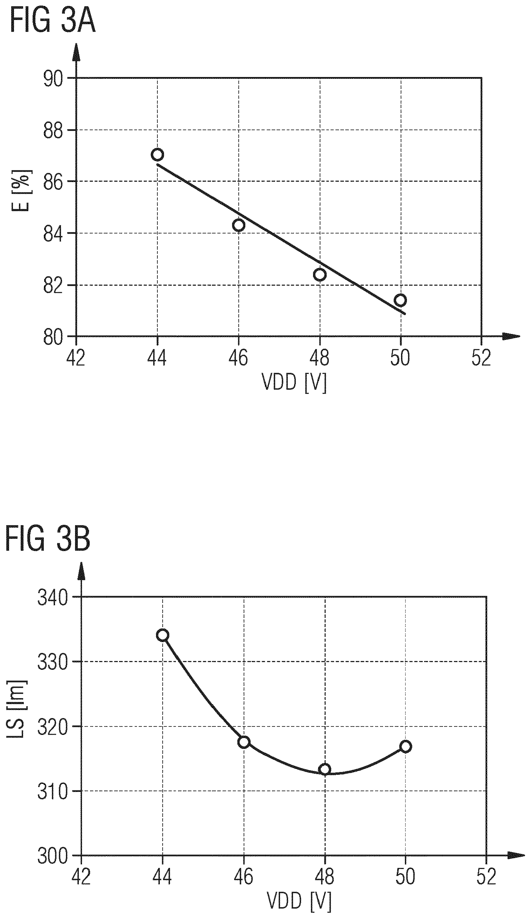

Figur 3A zeigt ein Beispiel für eine Effektivität E des Segments 11 des Lichtbands 10 in Abhängigkeit von der Betriebsspannung VDD. In diesem Beispiel nimmt im gezeigten Bereich der Betriebsspannung VDD von 44V bis 50V die Effektivität E mit zunehmender Betriebsspannung VDD geringfügig ab. Die Effektivität E ist hier das Verhältnis der Energie, die der ersten Anzahl N von Leuchtdioden zugeführt wird, zu der vom Segment 11 verbrauchten Energie.

Figur 3B zeigt ein Beispiel für einen Lichtstrom LS (englisch luminous flux oder luminous output) in Lumen eines Segments 11 in Abhängigkeit der Betriebsspannung VDD. Der Lichtstrom LS weist den höchsten Wert bei der niedrigsten Betriebsspannung VDD auf. In Figur 3B ist die Betriebsspannung VDD aus einem Bereich zwischen 44V und 50V. Trotz der Änderung der Betriebsspannung VDD um 6V und damit zirka 14 % weist der Lichtstrom LS eine Änderung von ausschließlich 7 % auf. Somit zeigt der Abwärtswandler 12 gute Reglereigenschaften.

In Figuren 3A und 3B sind Messungen an einem Prototyp dargestellt. Dieser ist als Lichtband mit 14 LEDs mit einer Breite des flexiblen Leiterplattenabschnitts 26 von 12 mm gebaut. Jedes Bandsegment 11 hat eine Länge von 100mm. Dieser Prototyp wurde für eine Versorgungsspannung VDD von 48V mit einem Laststrom IL von 60mA betrieben. Daraus ergibt sich ein Lichtstrom LS von ca. 3.200 lm/m. Der Spannungsabfall entlang des LED-Bandes 10 bei einem Laststrom von 60mA beträgt ca. 25mV für ein Segment von 100mm. Daraus ergibt sich ein Spannungsabfall von ca. 2,5V pro 10m und damit eine theoretisch betreibbare Lichtbandlänge von ca. 18m (z.B. Spannungsbedarf der Steuerung: 1,4V; Durchlassspannung einer LED 13, 14: 3V). Unter den gleichen Bedingungen ergibt ein Laststrom IL von 30mA (entspricht einem Lichtstrom LS von ca. 1.510 lm/m) eine maximale Lichtbandlänge von 38m.

Das Lichtband 10 kann auch flimmerfrei mit einem PWM-Dimmer betrieben werden. Dies ist möglich, weil die Schaltfrequenz des Abwärtswandlers 12 deutlich höher ist als die des PWM-Dimmers. PWM ist die Abkürzung für Pulsweitenmodulation.

Das EMV-Verhalten des LED-Bandes 10 hat sich trotz des Hochfrequenzbetriebs als unkritisch erwiesen. Dies ist vor allem darauf zurückzuführen, dass die verschiedenen Abwärtswandler 12, 12' der einzelnen LED-Segmente 11, 30 frei nebeneinander arbeiten und damit nicht bei exakt derselben Frequenz arbeiten. Eine hohe Anzahl von LEDs pro Bandsegment 11 ist für die Effizienz von Vorteil, da sie den für einen bestimmten Lichtstrom LS benötigten LED-Strom IL reduziert. Gleichzeitig wird die Homogenität des erzeugten Lichtbildes verbessert.

Figur 4 zeigt ein weiteres Beispiel für ein lineares Lichtband 10. Das lineare Lichtband 10 umfasst das Segment 11 und das weitere Segment 30. Das weitere Segment 30 ist das letzte Segment. Die erste Anzahl N der Leuchtdioden 13, 14 des Segments 11 ist 8. Zwischen den Leuchtdioden 13, 14 der ersten Anzahl N von Leuchtdioden sind Anschlussstellen 51 bis 55 angeordnet. Das letzte Segment, nämlich das Segment 30, ist gekürzt. Das Kürzen des Segments 30 kann beispielsweise vom Verwender des linearen Lichtbandes 10, etwa von einem Lampenhersteller, durchgeführt werden. Beispielsweise wird das Verkürzen des letzten Segments durchgeführt, falls der Einbauraum nicht mehr für ein vollständiges Segment reicht. Zum Betrieb der noch vorhandenen Leuchtdioden des letzten Segments 30, im Beispiel in Figur 4 der zwei Leuchtdioden 13, 14, wird eine Verbindung, z.B. durch einen isolierten Draht, zwischen der Anschlussstelle 52' und der zweiten Versorgungsleitung 16 durchgeführt. Dazu kann die zweite Versorgungsleitung 16 an geeigneten Stellen weitere Anschlussflächen 58 bis 62 umfassen. In Figur 4 ist jeweils eine Anschlussstelle 51 bis 55 zwischen zwei Leuchtdioden angeordnet. Somit ergeben sich N-1 Anschlussstellen bei der ersten Anzahl N von Leuchtdioden. Die Anschlussstellen 51 bis 55 bzw. die weiteren Anschlussstellen 58 bis 62 können als Lötfläche oder Lötpad realisiert sein.

Alternativ sind weniger Anschlussstellen realisiert (z.B. kann alternativ die Anzahl der Anschlussstellen eines Segments 11 eins, zwei, N/3 oder N/2 sein). Mindestens eine Anschlussstelle ist zwischen zwei Leuchtdioden der ersten Anzahl N von Leuchtdioden realisiert.

Der Spannungsabfall über die zwei Leuchtdioden 13, 14 im weiteren Segment 30 ist deutlich kleiner als der Spannungsabfall über die sechs Leuchtdioden des Segments 11. Der Wert des Laststroms IL, bei dem das Ausschalten des ersten Transistors T1 erfolgt, wird jedoch durch den Widerstandswert des ersten Widerstands R1 und durch die Transistorcharakteristiken des ersten und des zweiten Transistors T1, T2 vorgegeben. Der Laststrom IL ist somit nach oben begrenzt, sodass eine Überlastung der Leuchtdioden 13', 14' des Segments 30 vermieden wird.

Mit Vorteil ermöglicht das lineare Lichtband 10 insbesondere den Betrieb sehr langer LED-Bänder mit hoher Effizienz. Es kann mit einer hohen Differenzspannung betrieben werden, dennoch liegen die Regelverluste für die einzelnen LED-Segmente im Bereich von 10%. Vorteilhafterweise kann die Schaltung für den Stromregler bzw. Abwärtswandler 12 auf den einzelnen Segmenten des LED-Bandes einfach gehalten werden. Mit nur wenigen Komponenten und einer kompakten Induktivität L1 kann der beschriebene Buck-Regler 12 etabliert werden.

Das Lichtband 10 für eine Betriebsspannung VDD von 48V kann z.B. in Längen von bis zu 30m und mehr mit einseitiger Energieeinspeisung bei einem erzielten Lichtstrom LS von 1.000 lm/m betrieben werden. Das Lichtband 10 kann z.B. bei der seitlichen Sicherheitsbeleuchtung in Tunneln angewendet werden. Mit Vorteil erfüllt das Lichtband 10 mit einer Betriebsspannung VDD von 48V oder auch bei anderen Spannungen die Bedingungen für den SELV-Betrieb (SELV ist die Abkürzung von Safety Extra Low Voltage, deutsch Sicherheitskleinspannung). Somit ergeben sich bessere Sicherheitsbedingungen im Vergleich zu LED-Bändern, die mit 230V betrieben werden. Dies ermöglicht z.B. die Beleuchtung von langen Gängen im Bergbau. Aber bei Leuchten kann das Lichtband 10 angewendet werden. Hohe Lichtströme LS können effizient und präzise realisiert werden. Der Hochfrequenzbetrieb für die Stromregelung ermöglicht ein sehr präzises Dimmen. Ein weiterer Vorteil gegenüber herkömmlichen LED-Modulen im Leuchtendesign ist, dass das Segment 11 in weiten Bereichen verkürzt werden kann. Dies ermöglicht eine einfache Gestaltung von Langfeldleuchten mit unterschiedlichen Längen. Ebenso kann das für eine Leuchte verwendete LED-Band aus einer langen Masterspule entnommen werden. Gerade im Bereich der Leuchten für 48V-Stromschienen ergeben sich Vorteile bei der Herstellung und dem Betrieb solcher Leuchten.

Obwohl die Erfindung anhand von Ausführungsbeispielen detailliert dargestellt und beschrieben wurde, ist sie nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 10: lineares Lichtband
- 11: Segment
- 12: induktiver Abwärtswandler
- 13, 14: Leuchtdiode
- 15: Wandlerausgang
- 16: zweite Versorgungsleitung
- 18: erste Versorgungsleitung
- 21, 23: Eingangsanschluss
- 22, 24: Ausgangsanschluss
- 25: erster Knoten
- 26: flexibler Leiterplattenabschnitt
- 30: weiteres Segment
- 31 bis 43: Leuchtdiode
- 44: zusätzliches Segment
- 51 bis 55: Anschlussfläche
- 58 bis 62: weitere Anschlussfläche
- D1: Diode
- E: Effizienz
- GND, GND_IN, GND_OUT: Bezugspotential
- IL: Laststrom
- LS: Lichtstrom
- L1: Induktivität
- R1: erster Widerstand
- R2: zweiter Widerstand
- R3: dritter Widerstand
- T1: erster Transistor
- T2: zweiter Transistor
- T3: dritter Transistor
- VDD, +IN, +OUT: Betriebsspannung

## Patentansprüche

1. Lineares Lichtband,
umfassend mindestens zwei Segmente (11, 30),
wobei die mindestens zwei Segmente (11, 30) miteinander gekoppelt sind und jeweils umfassen:
- einen flexiblen Leiterplattenabschnitt (26),
- einen Abwärtswandler (12), der als induktiver Abwärtswandler realisiert ist, und
- mindestens eine Leuchtdiode (13, 14), die mit dem Abwärtswandler (12) zur Energieversorgung der mindestens einen Leuchtdiode (13, 14) gekoppelt ist.

2. Lineares Lichtband nach Anspruch 1, bei dem der Abwärtswandler (12) ausgelegt ist,
- bei einer Betriebsspannung (VDD) über einem ersten Wert als oszillierender Abwärtswandler einen Laststrom (IL) abzugeben und
- bei einer Betriebsspannung (VDD) unter dem ersten Wert als linearer Regler den Laststrom (IL) abzugeben.

3. Lineares Lichtband nach Anspruch 1 oder 2, bei dem die mindestens zwei Segmente (11, 30) frei von einer als diskretes Bauelement realisierten Kapazität sind.

4. Lineares Lichtband nach einem der Ansprüche 1 bis 3, bei dem die mindestens zwei Segmente (11, 30) jeweils eine erste Versorgungsleitung (18) umfassen und bei dem der Abwärtswandler (12) einen ersten Widerstand (R1), einen ersten Transistor (T1) und eine Induktivität (L1) umfasst, die seriell zwischen der ersten Versorgungsleitung (18) und einem Wandlerausgang (15) des Abwärtswandlers (12) angeordnet sind.

5. Lineares Lichtband nach Anspruch 4, bei dem ein erster Anschluss des ersten Transistors (T1) über den ersten Widerstand (R1) mit der ersten Versorgungsleitung (18) gekoppelt ist und ein zweiter Anschluss des ersten Transistors (T1) über die Induktivität (L1) mit dem Wandlerausgang (15) gekoppelt ist.

6. Lineares Lichtband nach Anspruch 4 oder 5, bei dem die mindestens zwei Segmente (11, 30) jeweils eine zweite Versorgungsleitung (16) umfassen und bei dem der Abwärtswandler (12) eine Diode (D1) umfasst, die einen ersten Knoten (25) zwischen dem ersten Transistor (T1) und der Induktivität (L1) mit der zweiten Versorgungsleitung (16) koppelt.

7. Lineares Lichtband nach einem der Ansprüche 4 bis 6, bei dem der Abwärtswandler (12) einen zweiten Transistor (T2) umfasst mit
- einem ersten Anschluss, der mit der ersten Versorgungsleitung (18) gekoppelt ist,
- einem zweiten Anschluss, der mit einem Steueranschluss des ersten Transistors (T1) gekoppelt ist, und
- einem Steueranschluss, der mit einem Knoten zwischen dem ersten Widerstand (R1) und dem ersten Transistor (T1) gekoppelt ist.

8. Lineares Lichtband nach einem der Ansprüche 4 bis 7, bei dem der Abwärtswandler (12) einen dritten Widerstand (R3) und einen dritten Transistor (T3) umfasst mit
- einem ersten Anschluss, der mit einem Steueranschluss des ersten Transistors (T1) gekoppelt ist,
- einem zweiten Anschluss, der über den dritten Widerstand (R3) mit einer zweiten Versorgungsleitung (16) gekoppelt ist, und
- einem Steueranschluss, der mit einem ersten Knoten (25) zwischen dem ersten Transistor (T1) und der Induktivität (L1) gekoppelt ist.

9. Lineares Lichtband nach einem der Ansprüche 1 bis 8, bei dem die mindestens eine Leuchtdiode (13, 14) als eine erste Anzahl N von Leuchtdioden realisiert ist, die seriell angeordnet sind und an einen Wandlerausgang (15) des Abwärtswandlers (12) angeschlossen sind, wobei die erste Anzahl N größer als eins ist und zwischen zwei der ersten Anzahl N von Leuchtdioden eine Anschlussstelle (51 bis 55) realisiert ist, die mit der zweiten Versorgungsleitung (16) verbindbar ist.

10. Lineares Lichtband nach einem der Ansprüche 1 bis 9, bei dem das Segment (11, 30) jeweils frei von einer Stromquelle oder Stromsenke ist, die zusätzlich zum Abwärtswandler (12) im Segment (11, 20) enthalten ist.
